# EUROPEAN PATENT APPLICATION

(11) **EP 1 134 504 A2**
(43) Date of publication of application: **19.09.2001**
(21) Application number: 01102349.6
(22) Date of filing: 01.02.2001
(51) Int. Cl.: F24D 3/16

(54) **Modular floor heating device**

(30) Priority: 16.03.2000 IT PS000008
(71) Applicant: C.R.M. di Giovanelli Gianfranco & C.S.n.c., 61032 Fano (Pesaro) (IT)
(72) Inventor: Giovanelli, Gianfranco, 61032 Fano (Pesaro) (IT)
(74) Representative: Negrini, Elena

(57) **Abstract**

A modular floor heating device with circulation of a fluid (F) heated by a heating source includes:
- a plurality of manifold panels (2) each provided with a plurality of ducts (5, 6) whose ends are connected to first connection means (20);
- a plurality of manifolds (7, 8) of the manifold panels (2) each in flow communication with a related duct (5, 6) and whose free end is connected to second connection means(10);
- a plurality of heating panels (3) each one having at least a coil (9).

In an assembled condition (M) the ducts (5, 6) of the manifold panels (2) are connected by first connection means (20), the ends of the coils (9) are connected by the second connection means (10) to the respective manifolds (7, 8), that cooperate with the ducts (5, 6) for the circulation of the heated fluid (F) in each coil (9) transferring the fluid heat to the environment.

## Description

The invention refers to heating devices for rooms fit to lodge people.

More precisely the present invention refers to a modular floor heating device for heating particularly churches or other buildings.

The known heating devices have radiators or heat exchangers in which heated water circulates. The radiators or exchangers heat, by convection and radiative, the rooms in which they are installed.

The main drawback of the known devices is that chases are needed for housing the piping in the floors and/or in the walls. When installing visible piping, the known devices are bulky and unaesthetic and, however, they cause the damage of the rooms in correspondence of the fixing points of said devices.

The known warm air devices have the duct or convector fans blowing warm air into the rooms to be heated.

The main disadvantage of said known devices consists in their fixing which involves the damage of the walls, columns or other elements of the installation rooms.

A further disadvantage consists in the dimensions and in the unaesthetic effect of these known devices.

Other disadvantages are the high noise generated, the temperature stratifications and the wide thermal dispersions in the buildings having great height.

They are known big heating block elements to be fit in the floor, for instance under churches benches, including heat exchangers and the related connections. These known block elements have the main drawback to be extremely expensive since they must be designed and realized with precise sizes.

Another disadvantage is represented by their outstanding dimensions and by the difficult installation. Besides, the exchangers of said known block elements are carried out on site with different solutions, with considerable thickness that cause dangerous stairs with the remaining uncovered part of the floor.

Furthermore, all the known heating devices with elevated power have the drawback to be unmovable, making difficuit and expensive their change, widening or dismounting.

Because of said drawbacks, many monumental or public buildings do not have heating systems yet.

The main object of the present invention is to propose a modular floor heating device fast and economic to be carried out, allowing changes and removals without damaging the structures of the installation rooms.

Other object is to propose a heating device not bulky, having a very low aesthetical impact, silent, which does not create barriers for the handicapped people and is safe for the people.

Further objects are to internally integrate control valves of the warm water flow, to allow a higher tolerance of the piping lengths and to obtain a high insensitiveness to the thermal piping expansions.

The characteristics of the invention are underlined in the following with particular reference to the enclosed drawings in which:
- figure 1 show a schematic plan view of the device object of the invention in which some parts have been removed for better showing the others;
- figure 2 shows an enlarged schematic top view of a heating panel of figure 1 in which some parts have been removed for better showing the others;
- figure 3 shows a cross section of a heating panel of figure 1;
- figure 4 shows an enlarged schematic top view of a manifold panel of figure 1, in which some parts have been removed for better showing the others;
- figure 5 shows a partial enlarged top view of a heating panel of figure 1;
- figure 6 shows a cross section view according to the line VI-VI of figure 4;
- figure 7 shows a cross section view according the line VII - VII of figure 4;
- figure 8 shows an enlarged cross section view of a portion of the device of figure 1;
- figure 9 shows a partial cross section view of a variant of the device of figure 1;
- figure 10 shows an enlarged top view of the assembling means of figure 9.

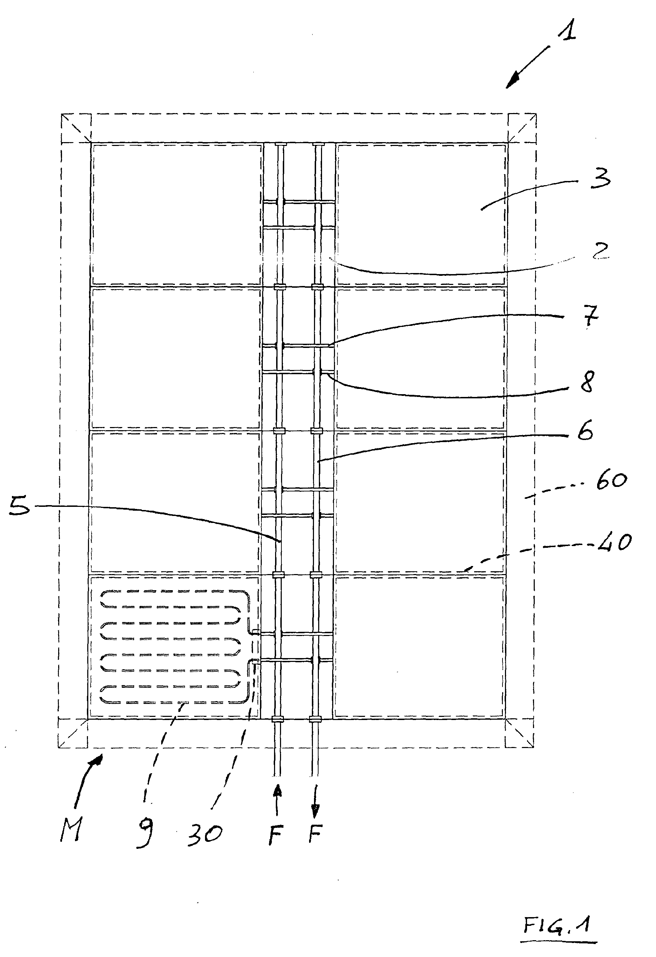

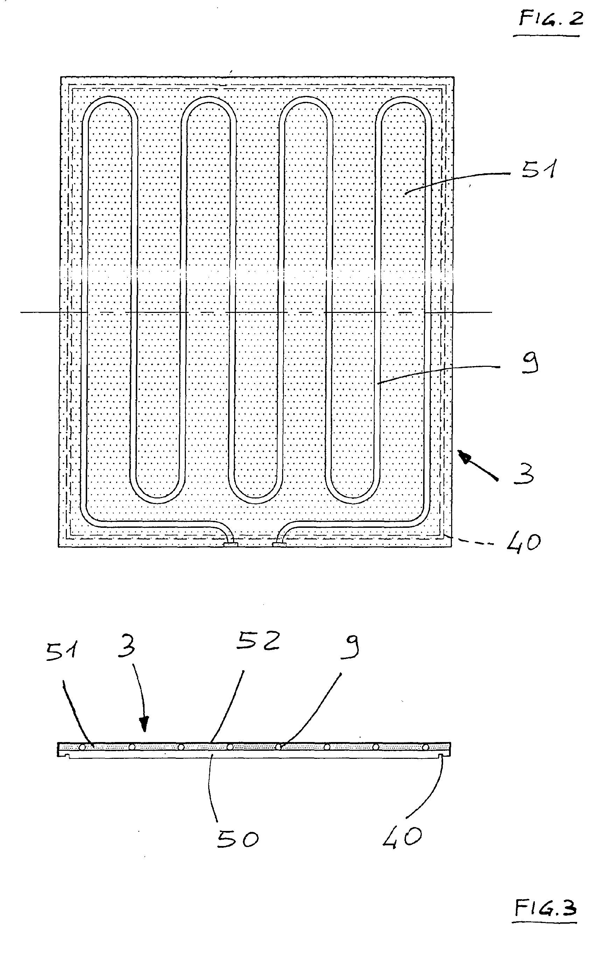

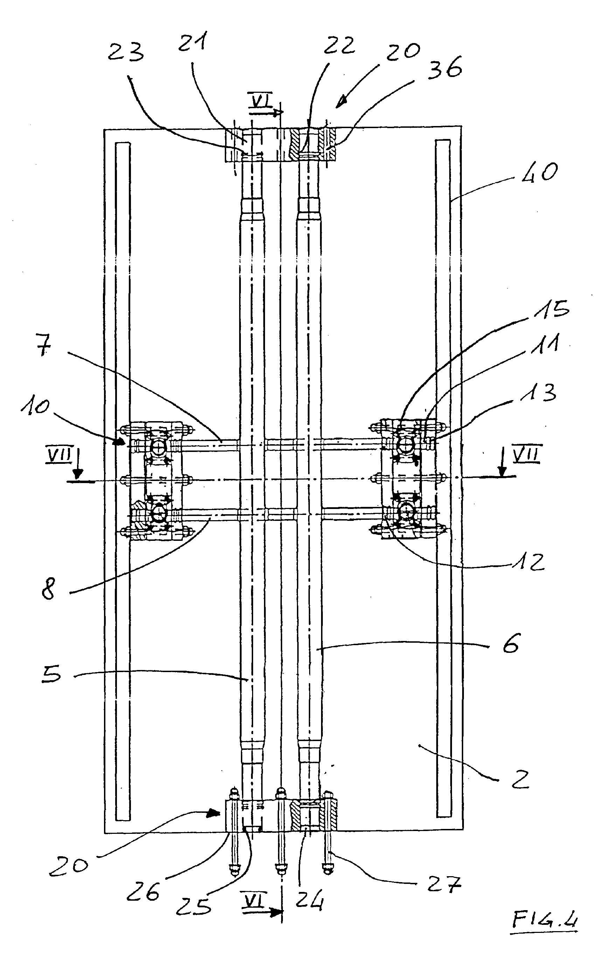

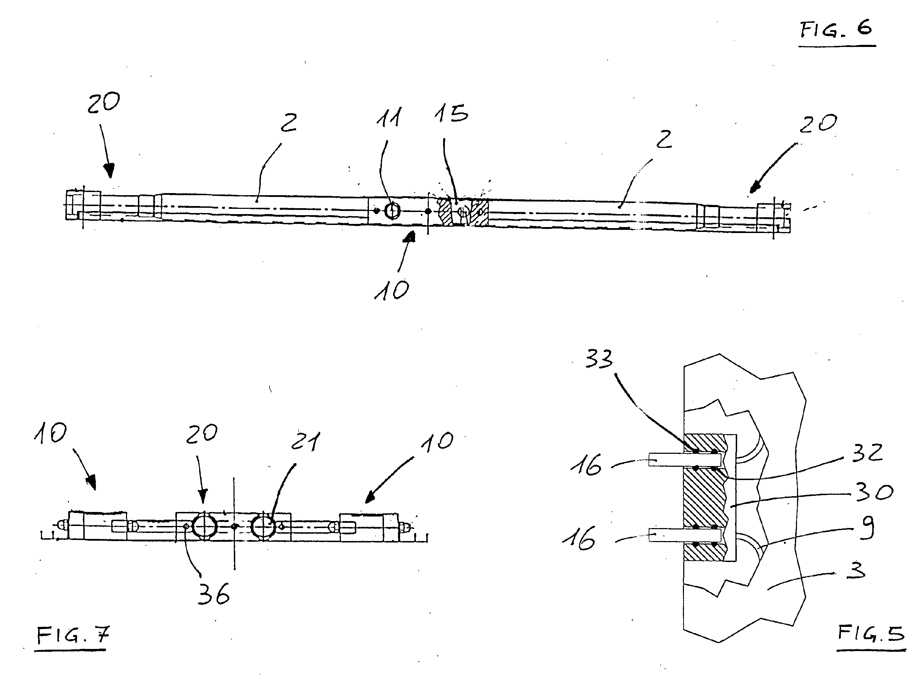

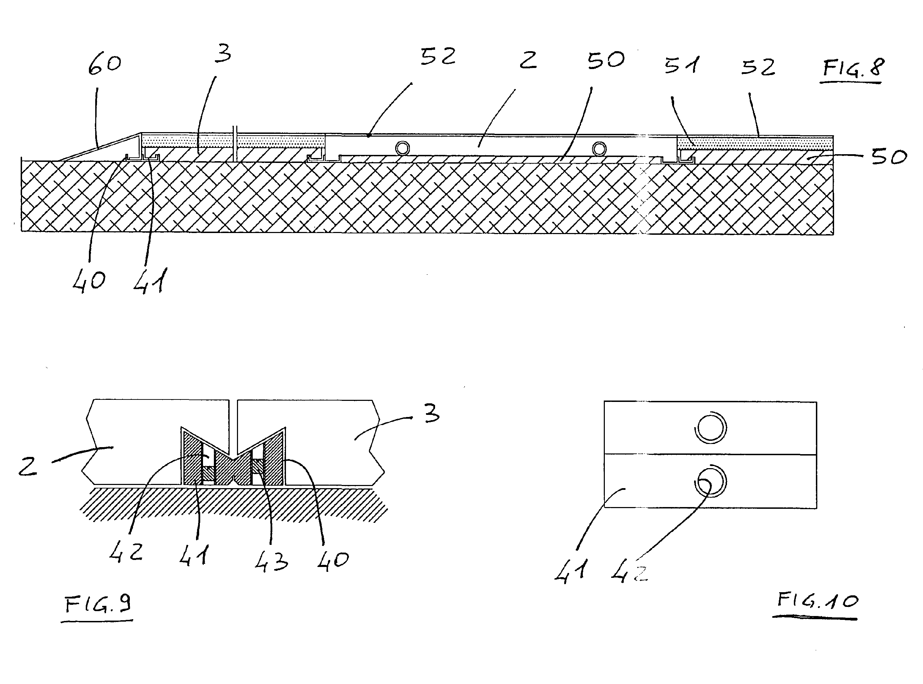

With reference to figures 1-8, numeral 1 indicates the modular floor heating device object of the present invention. In the device 1 a heating source, for instance a boiler, heats a fluid F, for instance water or an antifreeze solution, that flows in said device 1, for instance by means of pumps associated to the heating source.

The device 1 includes a plurality of manifold panels 2 and a plurality of heating panels 3.

Each manifold panel 2 is provided with a delivery duct 5 and return duct 6, each of these latter is hydraulically connected to a manifold, respectively delivery 7 and return 8, having diameter smaller that the ducts diameter.

In order to minimize the thickness of the panels, it is provided that the delivery 7 and return 8 manifolds cross, without flow communication, respectively the return 6 and delivery 5 ducts.

In alternative is also provided that the ducts 5, 6 have a small diameter for allowing, with the same panels thickness, the intersection with the manifolds 7, 8 without passing through thereof.

Tests show that the sum of the resistances in the ducts 5, 6 produced by the narrowing due to the crossing of the manifolds 7, 8 is lower than the resistance increase due to the diameter reduction of the ducts 5, 6.

The ends of the ducts 5, 6 and of the manifolds 7, 8 are associated respectively to connection means first 20 and second 10.

The heating panels 3 have at least a coil 9.

In an assembled condition M of the manifold panels 2 and heating panels 3, the ducts 5, 6 of the manifold panels 2 are reciprocally connected by the first connection means 20 and the coils 9 are connected by the second connection means 10 with the respective manifolds 7, 8.

Then the fluid F circulates in the coils 9 through the manifolds 7, 8 and the ducts 5, 6.

The first connection means 20 have each a couple of through holes 21 for housing the ends of the ducts 5, 6.

Each through hole 21 has a couple of housings 22 for sealing means 23, of the O-Ring type, to guarantee the watertight between each first connection means 20 and the related ducts 5, 6.

To guarantee the watertight between ducts 5, 6 of manifold panels 2, consecutive and interconnected, one of the first connection means 20 of each manifold panel 2 has a housing 24, in correspondence of the external side 26, faced toward the manifold panel 2, for at least a gasket 25, for instance an O-Ring, that encloses the opening of each through hole 21.

The reciprocal fixing between manifold panels 2 is carried out by screw means 27, for instance screw stud or bolts whit nuts, fit in a plurality of cavities 26, for instance through holes, of the first faced connection means 20 of the adjacent manifold panels 2.

Each second connection mean 10 has a through hole 11 for each related manifold 7, 8. The ends of each hole 11 have housings 12, for instance annular cavities, for sealing means 13, for instance O-Ring, for the watertight between each manifold 7, 8 and the related second connection mean 10. In the assembled condition M, end means 14 of the coils 9 are watertight housed in the remaining ends of the through holes 11.

It is provided that the end means 14 can consist in prolongations of the coils 9 at the outside of the related heating panels 3 but it is also provided that the end means 14 consist of couplings 16 each fit in a respective hole 31 carried out in third connection means 30. The watertight between these latter and the couplings 16 is realized by sealing means 33, for instance O-Ring, housed in the related housing 32, for instance annular-type, carried out in correspondence of the wall of the holes 31.

The second connection mean 10 has a valve mean 15, for instance a truncatedconic body having a transversal through hole housed in a complementary shaped cavity, for at least one of the through holes 11.

The valve means 15 are fit to regulate the flow of the fluid F in the related coil 9.

The external edges of the panels 2, 3 can have chutes 60 connecting the floor.

The device further includes assembling means 41 engaging connection housings 40 carried out in the heating panels 3 at the bottom, in the manifold panels 2 and in the chutes 60 of the device 1.

The assembling means 41 consist of "C" sections, simple or double, whose external edges engage the connection housings 40 having the shape of grooves with rectangular section.

The heating panels 3 include an insulator layer 50, above which it is positioned the coil 9 inserted into a heating conductor mortar 51 and have at the top a plane 52.

The manifold panels 2 have the layer 50, above which there are positioned the ducts 5, 6 and the manifolds 7, 8 overhung by the plane 52.

The plane 52 consists, for instance, of a layer of parquet or a metallic or plastic slab.

The operation provide that in the assembled condition M the fluid F circulates into the ducts 5, 6, in the manifolds 7, 8 and into the coils 9 where transfers heat to the environment. The fluid flow of each heating panel 3 can be regulated by the related valve means 15 in such a way to make uniform the heating on the whole surface of the device.

The expansions of the ducts 5, 6 and the manifolds 7, 8, due to the temperature variations of the fluid F, corresponding to the starting and stopping conditions of the heating source, do not cause tensions in the manifold panels 1 because the ends of the ducts and manifolds can slide in the respective through holes 21, 11 and the sealing means 23, 13 avoid the losses of fluid F.

In the device variant of the figures 9 and 10, the assembling means 41 consist of extended prismatic bodies with "M" shaped cross section whose points engaged the connection housings 40 having the shape of grooves with triangular section. The prismatic bodies have a plurality of nut screws 42 for as many threaded pivots 43.

The lower portion of the prismatic bodies can have a longitudinal groove fit for housing an alignment guide, for instance a fillet, for the assembling means 41.

The rotation of the threaded pivots 43 allows to vary the height of the prismatic bodies and therefore to assemble the device 1 also on irregular floors.

There also provided fillets for closing the fissures between panels 2, 3 and chutes 60.

It is important to observe that the device 1 is composed only by three kinds of modules, consisting of manifold panels 2 and heating panels 3 and chutes 60, also simplifying advantageously the storage, the transport, the handling and the assembling.

The main advantage of the present invention is to provide a modular floor heating device fast and economic to be carried out, allowing a change and removal without damaging the structures of the installation.

Other advantage is to provide a device not bulky, having a very low aesthetical impact, silent, which don't create barriers for the handicapped people and is safe for the people.

Further advantages of the present invention are to provide internal control valves of the warm water flow, to allow a higher tolerance of the piping lengths and to obtain a high insensitiveness to the thermal expansions of the piping.

## Claims

1. Modular floor heating device with circulation of a fluid (F) heated by a heating source **characterized in that** it includes:
- a plurality of manifold panels (2) each provided with a plurality of ducts (5, 6) whose ends are connected to first connection means (20);
- a plurality of manifolds (7, 8) of the manifold panels (2) each in flow communication with a related duct (5, 6) and whose free ends are connected to second connection means (10);
- a plurality of heating panels (3) each of them having at least a coil (9);
in an assembled condition (M) the ducts (5, 6) of the manifold panels (2) are connected by first connection means (20); the ends of the coils (9) are connected, by the second connection means (10), to the respective manifolds (7, 8), which cooperate with the ducts (5, 6) for the circulation of the heated fluid (F) in each coil (9) transferring the heat of the fluid (F) to the environment.

2. Device according to claim 1 **characterized in that** each first connection mean (20) has a through hole (21) for each related duct (5, 6), said through hole (21) having housing (22) for sealing means (23) for each related duct (5, 6).

3. Device according to claim 1 **characterized in that** at least one of the first connection means (20) of each manifold panel (2) has in correspondence of the external side (26) at least a housing (24) for at least a gasket (25).

4. Device according to claim 1 **characterized in that** the first connection means (20) have a plurality of cavities (36) for screw means (27) for the mutual fixing between adjacent manifold panels (2).

5. Device according to claim 1 **characterized in that** each second connection mean (10) has a through hole (11) for each related manifold (7, 8); the ends of said hole (11) having housings (12) for sealing means (13) fit to mate the manifold (7, 8) and having in the assembled condition (M) end means (14) of one of the coils (9).

6. Device according to claim 5 **characterized in that** the end means (14) consist of couplings (16) each fit into a respective hole (31) having housing (32) for sealing means (33) fit to mate said coupling (16), said holes (31) being in flow communication with the related coil (9) and being carried out in third connection means (30).

7. Device according to claim 5 **characterized in that** the second connection mean (10) has a valve mean (15), for at least one of the through holes (11), which is fit to control the flow of the fluid (F) in the related coil (9).

8. Device according to anyone of the preceding claims **characterized in that** it further includes assembling means (41), to be fit in the connection housings (40) carried out at the bottom of the heating panels (3), in the manifold panels (2) and in eventual chutes (60) of the device (1).

9. Device according to claim 8 **characterized in that** the assembling means (41) consist of "C" section, simple or double, whose external edges engage the connection housing (40) having the shape of grooves with rectangular section.

10. Device according to claim 8 **characterized in that** the assembling means (41) consist of extended prismatic bodies with "M" cross section whose tips engage the triangular shaped connection housings (40), said prismatic bodies including a plurality of nut screws (42) for as many threaded pivots (43).

11. Device according to anyone of the preceding claims **characterized in that** the heating panels (3) include an insulator layer (50), above which it is positioned the coil (9) fit in a heating conductor mortar (51), and have a plane (52) at the top.
